# EUROPÄISCHE PATENTSCHRIFT

(11) **EP 3 608 081 B1**
(45) Veröffentlichungstag und Bekanntmachung des Hinweises auf die Patenterteilung: **17.03.2021**
(21) Anmeldenummer: 19190197.4
(22) Anmeldetag: 06.08.2019
(51) Int. Cl.: B29C 48/00, C08L 67/03, E06B 3/263, C08L 67/02, C08G 63/183, C08G 63/91, B29L 31/00, B29K 105/04, B29K 67/00

(54) **GEDÄMMTES BAUTEIL MIT PROFILSTRANG ZUR WÄRMEDÄMMUNG AUS GESCHÄUMTEM POLYETHYLENTEREPHTHALAT SOWIE VERFAHREN ZUR HERSTELLUNG EINES SOLCHEN BAUTEILS**
FOAMED POLYETHYLENE TEREPHTHALATE INSULATING COMPONENT WITH PROFILE STRUCTURE FOR HEAT INSULATION AND METHOD FOR MANUFACTURING SUCH A COMPONENT
COMPOSANT ISOLANT A MOUSSE DE TEREPHTALATE DE POLYETHYLENE AVEC STRUCTURE DE PROFIL POUR ISOLATION THERMIQUE ET PROCEDE DE FABRICATION D'UN TEL COMPOSANT

(30) Priorität: 06.08.2018 DE 102018213101
(43) Veröffentlichungstag der Anmeldung: 12.02.2020
(73) Patentinhaber: Gargiulo GmbH, 72147 Nehren (DE)
(72) Erfinder: GARGIULO, Fabio, 72116 Mössingen (DE)
(74) Vertreter: Kohler Schmid Möbus Patentanwälte

(56) Entgegenhaltungen:
- EP-A1- 2 567 799
- EP-A2- 2 642 058
- DE-A1- 3 227 509
- DE-A1-102014 104 112
- KR-A- 20170 071 972
- US-A1- 2008 029 926
- US-A1- 2011 171 456

## Beschreibung

Die Erfindung betrifft ein gedämmtes Bauteil mit einem Profilstrang zur Wärmedämmung. Die Erfindung betrifft weiterhin ein Verfahren zur Herstellung eines solchen Bauteils.

Es ist bekannt, Dämmmaterialien zur Wärmedämmung aus schäumbaren Kunststoffen herzustellen. Zur Herstellung von Profilsträngen aus Dämmmaterial werden als Kunststoffe bevorzugt Polyethylen oder Polystyrol verwendet, da diese aufgrund ihrer Molekülstruktur schäumbar sind und gute Dämmungseigenschaften aufweisen. US 2011/171456 A1 und DE 10 2014 104112 A1 offenbaren ein gedämmtes Bauteil mit aufgeschäumten Polyethylenterephthalat ohne Pulverbeschichtung. EP 2 642 058 A2 offenbart eine Pulverbeschichtung eines Isolierstegs und eine Härtung des Kunststoffs durch Elektronenstrahlhärtung, Strahlenvernetzung oder Laserhärtung. Ferner ist bekannt, die zu dämmenden Bauteile pulverzubeschichten, um sie korrosionsbeständig zu machen. Das Pulverbeschichten der Bauteile muss vor dem Anbringen des Dämmmaterials an dem Bauteil erfolgen, da beim Pulverbeschichten Temperaturen über 200 °C auftreten, wobei die verwendeten Kunststoffe nicht temperaturbeständig sind. Aus fertigungstechnischer Sicht ist es jedoch günstig, die Profilstränge des Dämmmaterials vor dem Pulverbeschichtungsverfahren auf das zu dämmende Bauteil aufzubringen und das gedämmte Bauteil in einem anschließenden Verfahrensschritt pulverzubeschichten.

Aufgabe der vorliegenden Erfindung ist daher, ein gedämmtes Bauteil aufzuzeigen, das temperaturbeständig im Pulverbeschichtungsverfahren ist.

Gelöst wird diese Aufgabe durch ein gedämmtes Bauteil gemäß Patentanspruch 1. Die Aufgabe wird weiterhin durch ein Verfahren zur Herstellung eines gedämmten Bauteils gemäß Patentanspruch 13 gelöst. Die übrigen Patentansprüche geben zweckmäßige Weiterbildungen an.

Das gedämmte Bauteil weist einen Profilstrang zur Wärmedämmung auf. Der Profilstrang weist dabei ein Dämmmaterial auf, das aus Polyethylenterephthalat, bevorzugt in einem Extruderverfahren, geschäumt wird. Dem Polyethylenterephthalat ist dabei ein Kettenverlängerer zugesetzt, wodurch das Polymer schäumbar ist. Die Kettenverlängerer-Moleküle reagieren mit den Polyethylenterephthalat-Molekülen und wirken dabei als Bindeglied zwischen jeweils zwei Polyethylenterephthalat-Polymeren, wodurch längere Polymerketten entstehen. Das Dämmmaterial aus geschäumtem Polyethylenterephthalat weist gegenüber Schäumen aus Polyethylen oder Polystyrol den Vorteil der höheren Temperaturbeständigkeit auf, wodurch der Profilstrang beständig in einem Pulverbeschichtungsverfahren ist.

Das Dämmmaterial des Profilstrangs weist bevorzugt eine Dichte von kleiner 150 kg/m³, besonders bevorzugt eine Dichte von kleiner 100 kg/m³ auf. Die Wärmeleitfähigkeit des Dämmmaterials beträgt bevorzugt weniger als 0,036 W/(m*K), besonders bevorzugt maximal 0,031 W/(m*K).

Der Kettenverlängerer weist Moleküle auf, die jeweils mit mindestens zwei endständigen Gruppen von Polyethylenterephthalat-Molekülen reaktiv sind, bevorzugt Pyromellitsäuredianhydrid, Trimellitsäureanhydrid und/oder 1,4-Bis(4,5-dihydro-2-oxazolyl)benzen. Der Kettenverlängerer kann dabei weitere Moleküle, insbesondere Trägersubstanzen, bevorzugt in Form von Polybutylenterephthalat aufweisen.

Dem Dämmmaterial kann ein Gleitmittel, bevorzugt ein Wachs, zugesetzt sein, was vorteilhaft im Extruderverfahren ist, da die Polymermasse besser im Extruder gleitet.

Dem Dämmmaterial kann ein Flammschutzmittel zugesetzt sein. Auch ohne zusätzliches Flammschutzmittel weist das Dämmmaterial eine gute Feuerfestigkeit auf, die für die meisten Anwendungen ausreichend ist. Durch Zusetzen eines Flammschutzes kann die Feuerfestigkeit aber zusätzlich erhöht werden.

Das gedämmte Bauteil kann ein Trägerteil aufweisen, an dem der Profilstrang zur Wärmedämmung angeordnet ist. Bevorzugt ist der Profilstrang an dem Trägerteil angeklebt, angeschweißt oder angeschraubt. Das Dämmmaterial des Profilstrangs weist die thermoplastischen Eigenschaften von Polyethylenterephthalat auf, daher lässt es sich gut schweißend verarbeiten. Das Dämmmaterial weist darüber hinaus eine relativ hohe Steifigkeit auf, weshalb es sich auch für eine Befestigung mittels Schraubverbindung eignet. Das Befestigen des Profilstrangs an dem Trägerteil vereinfacht die Handhabung des gedämmten Bauteils. Dies ist insbesondere vorteilhaft, wenn das gedämmte Bauteil pulverbeschichtet wird, da das gedämmte Bauteil als Ganzes dem Pulverbeschichtungsverfahren unterzogen werden kann.

Das gedämmte Bauteil kann ein hohles Profil aufweisen, wobei das hohle Profil aus mehreren Profilteilen zusammengesetzt sein kann und wobei die einzelnen Profilteile aus unterschiedlichen Werkstoffen ausgebildet sein können. Das hohle Profil kann zwei Rahmenprofilteile aufweisen, die bevorzugt als Aluminiumprofile ausgebildet sind, die mittelbar über ein Isolationsprofil verbunden sind, welches eine geringe Wärmeleitfähigkeit aufweist. Die Rahmenprofilteile und das Isolationsprofil bilden einen Hohlraum, an dessen Innenwandung der Profilstrang zur Wärmedämmung angeordnet ist. Der Profilstrang kann an dem Isolationsprofil oder dem Rahmenprofil angeordnet sein. Bevorzugt ist der Profilstrang an dem Isolationsprofil angeordnet und befestigt, was fertigungstechnisch von Vorteil sein kann. Das Isolationsprofil ist aufgrund der guten wärmedämmenden Eigenschaften und des geringen Gewichts bevorzugt aus Kunststoff ausgebildet, besonders bevorzugt aus Kunststoff, der temperaturbeständig in einem Pulverbeschichtungsverfahren ist. Bevorzugt füllt der Profilstrang nahezu oder vollständig die Breite des Hohlraums aus, wobei er als Wärmedämmung und Dampfsperre fungiert.

Das Isolationsprofil kann aus zwei separaten Trennstegen bestehen, wobei jeweils ein Trennsteg an einer ersten Seite an einem ersten Rahmenprofilteil und an einer zweiten Seite an einem zweiten Rahmenprofilteil angeordnet ist und wobei ein Profilstrang zur Wärmedämmung sich nahezu oder vollständig über den Abstand zwischen dem ersten Trennsteg und dem zweiten Trennsteg erstreckt. Ein Trennsteg kann dabei als Trägerteil ausgebildet sein, an dem der Profilstrang befestigt ist. Bevorzugt sind die Trennstege mit den Rahmenprofilteilen formschlüssig, insbesondere über eine Nut-Feder-Verbindung verbunden.

Das Isolationsprofil kann aus Acrylnitril-Butadien-Styrol ausgebildet sein. Bevorzugt ist das Isolationsprofil aus Polyamid ausgebildet, da es gute Festigkeitseigenschaften aufweist und temperaturbeständig in einem Pulverbeschichtungsverfahren ist.

Der Profilstrang kann als flexible Form aus dem Dämmmaterial ausgebildet sein, wobei der Profilstrang durch eine Pressverbindung zwischen zwei gegenüberliegenden Innenseiten des hohlen Profils kraftschlüssig im Profil befestigt sein kann. Die flexible Form weist die Vorteile auf, dass der Profilstrang die ganze Breite des Profils einnimmt, ohne dass enge Toleranzen bei der Fertigung eingehalten sein müssen. Zudem kann die Befestigung des Profilstrangs ohne zusätzliche Mittel erfolgen.

Das gedämmte Bauteil kann eine Ausnehmung in Form einer Aussparung oder einer Nut aufweisen, in der ein Randabschnitt einer Fensterscheibe aufgenommen werden kann. Demgemäß kann das gedämmte Bauteil ausgebildet sein, um eine Fensterscheibe einzurahmen. Bevorzugt ist die Ausnehmung in dem Isolationsprofil ausgebildet, wobei das Isolationsprofil selbst nutförmig ausgebildet oder im Bereich der Ausnehmung unterbrochen sein kann. Zwischen Profilstrang und Ausnehmung kann ein Kunststoffprofil angeordnet sein, das aus einem weicheren oder elastischeren Kunststoff als der Profilstrang ausgebildet ist. Somit wird die Beschädigung einer in der Ausnehmung aufgenommenen Fensterscheibe durch den angrenzenden Profilstrang verhindert.

Das Kunststoffprofil kann als Schnur ausgebildet sein, die auf dem Profilstrang befestigt, bevorzugt aufgeklebt oder aufgeschäumt sein kann. Das Kunststoffprofil kann in Form mehrerer Schnüre ausgebildet und die Schnüre können beabstandet voneinander am Profilstrang angeordnet sein.

Der Profilstrang zur Wärmedämmung kann pulverbeschichtet sein. Da der Profilstrang aus Polyethylenterephthalat ausgebildet ist, ist er temperaturbeständig im Pulverbeschichtungsverfahren. Bevorzugt sind mehrere oder alle Teile des gedämmten Bauteils pulverbeschichtet.

In dem gedämmten Bauteil kann eine Fensterscheibe abschnittsweise aufgenommen sein. Das gedämmte Bauteil kann Dichtelemente aufweisen, die im Kontaktbereich zwischen Profil und Fensterscheibe angeordnet sind. Das gedämmte Bauteil kann weitere Dichtelemente aufweisen, die einen Spalt zwischen zwei nebeneinander angeordneten gedämmten Bauteilen oder zwischen einem gedämmten Bauteil und einem weiteren Bauteil, z. B. einem Rahmen, abdichten.

Der Profilstrang kann in einem Extruderverfahren hergestellt werden, indem einer Extrusionsmasse, die Polyethylenterephthalat aufweist, ein Kettenverlängerer zugesetzt wird, sodass der Kettenverlängerer mit dem Polyethylenterephthalat reagieren kann, wodurch längere Polymerketten entstehen und somit die Extrusionsmasse schäumbar wird. Bevorzugt wird der Extrusionsmasse ein Treibmittel zugesetzt, um die Extrusionsmasse aufzuschäumen. Zudem können der Extrusionsmasse Nukleierungsmittel und Farbadditive zugesetzt werden. Die Extrusionsmasse wird zu einem Profilstrang extrudiert.

Der extrudierte Profilstrang kann auf einem Trägerteil angeordnet werden. Bevorzugt wird der Profilstrang an dem Trägerteil befestigt, besonders bevorzugt wird der Profilstrang auf das Trägerteil geklebt oder mit dem Trägerteil verschweißt. Insbesondere werden beim Kleben temperaturbeständige Klebstoffe verwendet. Das Trägerteil und der Profilstrang bilden das gedämmte Bauteil oder können mit weiteren Bauteilen verbunden werden, um das gedämmte Bauteil zu bilden.

Das gedämmte Bauteil kann pulverbeschichtet werden. Da der Profilstrang zur Wärmedämmung temperaturbeständig im Pulverbeschichtungsverfahren ist, kann das gedämmte Bauteil in Teilen oder als Ganzes pulverbeschichtet werden.

Des Weiteren weist der Profilstrang die Eigenschaften auf, dass er zu über 95 %, bevorzugt zu über 99 %, recyclebar ist, die Wasseraufnahme beträgt bevorzugt weniger als 2 %, das Dämmmaterial weist 0 % chlorierte Kohlenwasserstoffe auf, und das Dämmmaterial hat eine relativ hohe Druckfestigkeit im Vergleich mit anderen Kunststoffschäumen und lässt sich spanbearbeitend, insbesondere fräsend, bearbeiten.

Das gedämmte Bauteil kann konstruktiv gemäß dem in der DE 20 2009 019 039 U1 offenbarten Verbundprofil ausgebildet sein. Auf den Inhalt der DE 20 2009 019 039 U1 wird vollinhaltlich Bezug genommen und ihre Offenbarung vollinhaltlich hier eingeschlossen.

Der Profilstrang kann mechanisch kraftschlüssig an dem Trägerteil befestigt sein. Die Befestigung kann über eine Befestigungsstruktur am Trägerteil erfolgen, die mit dem Profilstrang verklemmt und/oder verhakt ist. Die Befestigungsstruktur kann dabei an einem freien Ende verbreitert ausgebildet sein, um einen Teil des Profilstrangs im Inneren des Profilstrangs zu hintergreifen. Die Befestigungsstruktur kann dabei im Querschnitt schlüssellochförmig oder pfeilförmig ausgebildet sein. Im Fall einer pfeilförmigen Ausbildung der Befestigungsstruktur weist die Pfeilspitze vorzugsweise in den Profilstrang hinein.

Weitere Merkmale und Vorteile der Erfindung ergeben sich aus der Beschreibung und der Zeichnung. Die vorstehend genannten und die noch weiter ausgeführten Merkmale können erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern sind schematisch dargestellt und haben beispielhaften Charakter für die Schilderung der Erfindung. Bezüglich der als Stand der Technik beschriebenen Merkmalskombinationen handelt es sich nur um eine Vermutung, dass es sich um Stand der Technik handelt. Tatsächlich könnte es sich auch lediglich um interne Kenntnisse seitens der Anmelderin handeln.

Es zeigen:
- Fig. 1: einen Schnitt durch eine Rahmenanordnung;
- Fig. 2: einen Schnitt durch eine weitere Rahmenanordnung;
- Fig. 3: einen Schnitt durch eine weitere Rahmenanordnung;
- Fig. 4a: einen Schnitt eines Profilstrangs;
- Fig. 4b: einen Schnitt eines gedämmten Bauteils;
- Fig. 5: eine Skizze eines Extrusionsprozesses;
- Fig. 6: einen Schnitt eines gedämmten Bauteils in einem skizzierten Pulverbeschichtungsprozess.

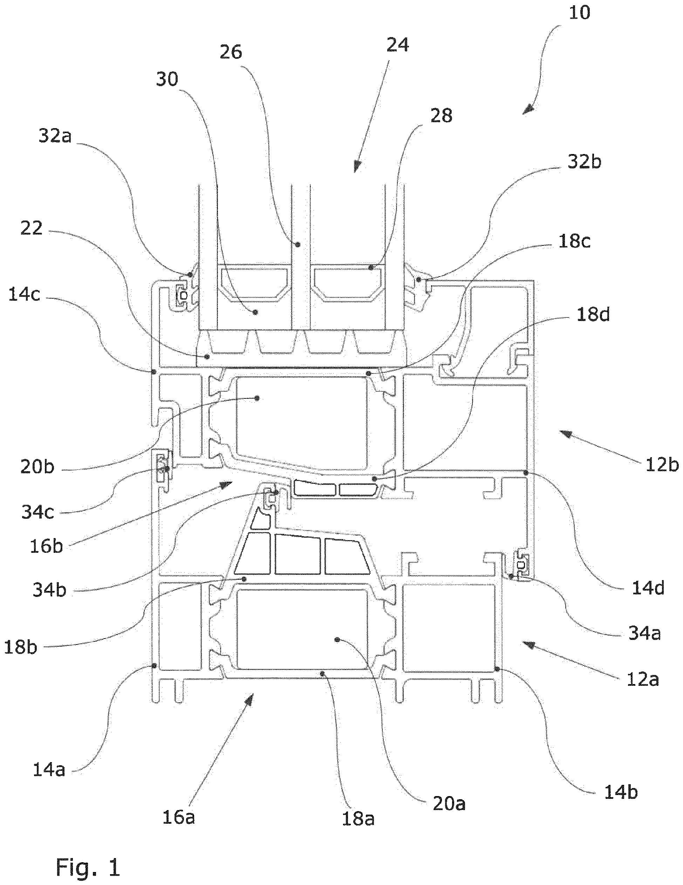

**Fig. 1** zeigt eine Rahmenanordnung **10** mit einem ersten gedämmten Bauteil **12a** und einem zweiten gedämmten Bauteil **12b.** Das erste gedämmte Bauteil 12a weist ein erstes Rahmenprofilteil **14a** und ein zweites Rahmenprofilteil **14b** auf. Ebenso weist das zweite gedämmte Bauteil 12b ein drittes Rahmenprofilteil **14c** und ein viertes Rahmenprofilteil **14d** auf. Das erste, zweite, dritte und vierte Rahmenprofilteil 14a, 14b, 14c, 14d sind als hohle Strangprofile mit unterschiedlicher Form ausgebildet. Zwischen dem ersten Rahmenprofilteil 14a und dem zweiten Rahmenprofilteil 14b ist ein erstes Isolationsprofil **16a** angeordnet; zwischen dem dritten Rahmenprofilteil 14c und dem vierten Rahmenprofilteil 14d ist ein zweites Isolationsprofil **16b** angeordnet. Das erste Isolationsprofil 16a und das zweite Isolationsprofil 16b weisen jeweils einen ersten Trennsteg **18a, 18c** und einen zweiten Trennsteg **18b, 18d** auf, wobei jeweils der erste Trennsteg 18a, 18c als Trägerteil ausgebildet ist, an dem ein Profilstrang **20a, 20b,** der aus Dämmmaterial aus geschäumtem Polyethylenterephthalat ausgebildet ist, zur Wärmedämmung angeordnet ist. Der Profilstrang 20a, 20b nimmt einen Großteil des Raums zwischen erstem Rahmenprofilteil 14a, zweitem Rahmenprofilteil 14b und erstem Isolationsprofil 16a bzw. drittem Rahmenprofilteil 14c, viertem Rahmenprofilteil 14d und zweitem Isolationsprofil 16b ein, sodass insbesondere nur ein minimaler Spalt zwischen Profilstrang 20a, 20b und zweitem Trennsteg 18b, 18d bleibt. Die zweiten Trennstege 18b, 18d sind als Hohlprofile geformt und derart ausgebildet, dass sie den Abstand zwischen erstem gedämmten Bauteil 12a und zweitem gedämmten Bauteil 12b überdecken.

An dem ersten Trennsteg 18c des zweiten Isolationsprofils 16b ist ein Kunststoffprofil **22** aus einem relativ weichen Material angeordnet, das den Zwischenraum zwischen dem ersten Trennsteg 18c und einer Fensterscheibe **24,** die in dem zweiten gedämmten Bauteil 12b aufgenommen ist, überdeckt. Die dargestellte Fensterscheibe 24 ist hier als Mehrfachverglasung ausgebildet mit drei einzelnen Glasscheiben **26** und dazwischenliegenden Distanzstücken **28** und Fensterdichtungen **30.** Der Übersichtlichkeit wegen ist nur der Randbereich der Fensterscheibe 24 dargestellt. Die nicht dargestellte gegenüberliegende Seite der Fensterscheibe 24 kann in einem gleich oder ähnlich ausgebildeten gedämmten Bauteil 12b eingefasst sein, sodass die Fensterscheibe 24 formschlüssig in der Rahmenanordnung 10 befestigt ist. Beiderseits der Fensterscheibe 24 sind Dichtlippen **32a, 32b** an dem gedämmten Bauteil 12b befestigt.

Weitere Dichtungen **34a, 34b, 34c** sind an den Kontaktstellen zwischen dem ersten gedämmten Bauteil 12a und dem zweiten gedämmten Bauteil 12b angeordnet, sodass keine feste Verbindung zwischen dem ersten gedämmten Bauteil 12a und dem zweiten gedämmten Bauteil 12b besteht und die gedämmten Bauteile 12a, 12b relativ zueinander bewegt werden können, im geschlossenen Zustand aber möglichst keine Gase zwischen dem ersten gedämmten Bauteil 12a und dem zweiten gedämmten Bauteil 12b passieren können. Eine Dichtung 34c ist als Flachdichtung ausgeführt und bildet einen besser definierten Kontaktpunkt als die flexibleren Dichtungen 34a, 34b.

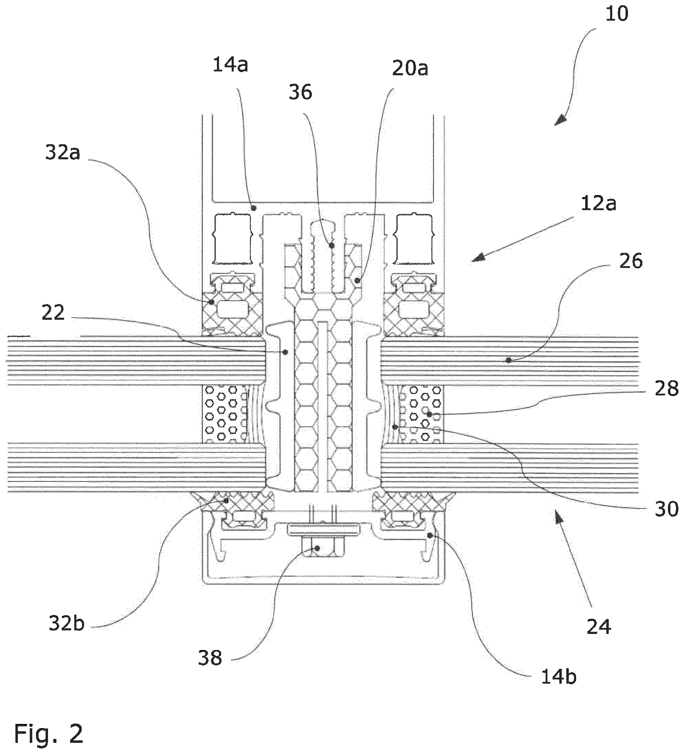

**Fig. 2** zeigt eine Ausgestaltung einer Rahmenanordnung 10, die ein erstes gedämmtes Bauteil 12a und zwei darin aufgenommene Fensterscheiben 24 aufweist, wobei jeweils nur der Randbereich der Fensterscheiben 24 dargestellt ist. Der wärmedämmende Profilstrang 20a ist an dem ersten Rahmenprofilteil 14a angeordnet, wobei in dem ersten Rahmenprofilteil ein Gewinde **36** ausgebildet ist, in das eine Schraube **38** eingeschraubt werden kann, die durch den Profilstrang 20a geführt und dessen Kopf an dem zweiten Rahmenprofilteil 14b befestigt werden kann. Beidseits des Profilstrangs 20a sind Kunststoffprofile 22 zwischen Profilstrang 20a und Fensterscheibe 24 angeordnet.

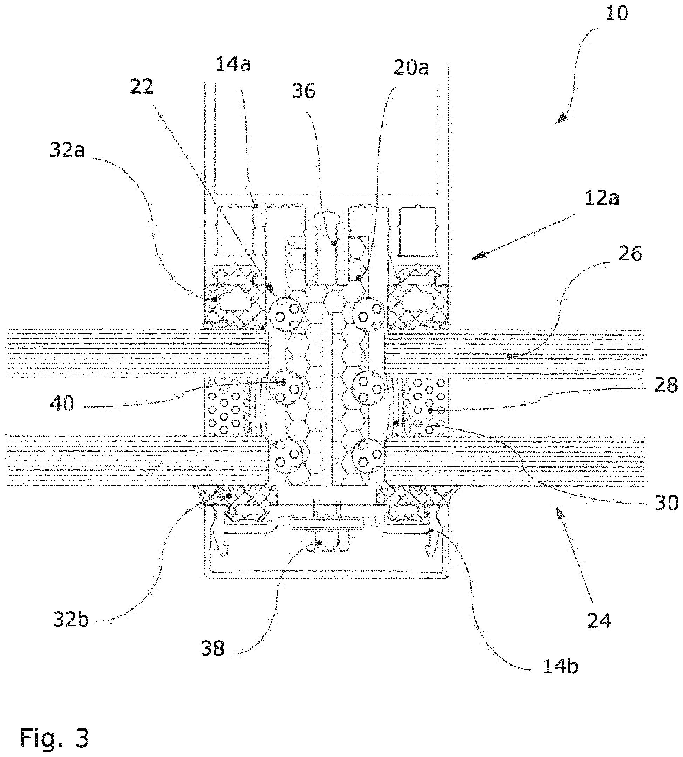

**Fig. 3** zeigt eine weitere Ausgestaltung einer Rahmenanordnung 10, ähnlich zu Fig. 2, die ein erstes gedämmtes Bauteil 12a und zwei darin aufgenommene Fensterscheiben 24 aufweist, wobei jeweils nur der Randbereich der Fensterscheiben 24 dargestellt ist. In der gezeigten Ausführung sind die Kunststoffprofile 22 zwischen Profilstrang 20a und Fensterscheibe 24 als Schnüre **40** ausgebildet, die auf den Profilstrang 20a aufgeklebt oder aufgeschäumt sind.

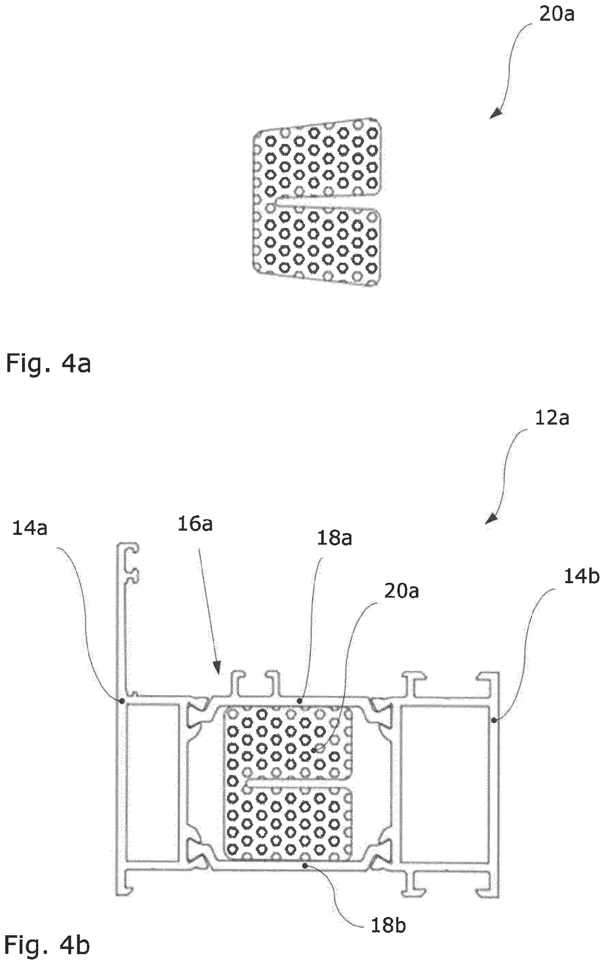

**Fig. 4a** zeigt einen Profilstrang 20a zur Wärmedämmung als flexible Form ausgebildet.

**Fig. 4b** zeigt den Profilstrang 20a aus Fig. 4a in einem gedämmten Bauteil 12a, wobei der Profilstrang 20a zwischen dem ersten Trennsteg 18a und dem zweiten Trennsteg 18b verspannt ist.

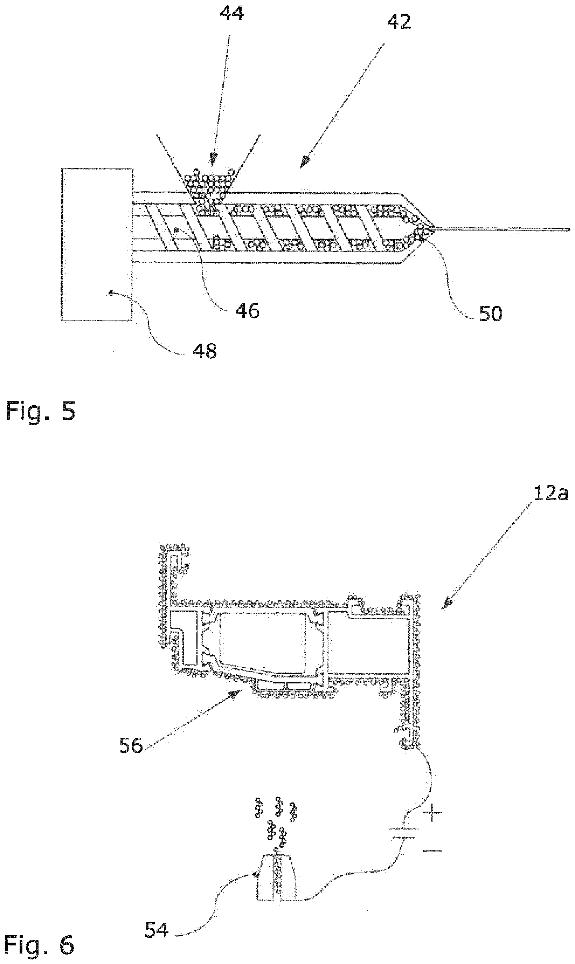

**Fig. 5** zeigt die Extrusion eines Profilstrangs 20a. Ein Extruder **42** wird mit der Extrusionsmasse **44** befüllt. Die Extrusionsmasse 44 weist Polyethylenterephthalat und einen Kettenverlängerer auf und kann weitere vorstehend genannte Zusätze aufweisen. Zudem wird der Extrusionmasse 44 ein Treibmittel zugesetzt. Der Extruder 42 weist eine Extruderschnecke **46** auf, die mittels eines Antriebs **48** bewegt wird und dadurch die Extrusionsmasse 44 durch eine Düse **50** presst. Die Extrusionsmasse 44 kann dabei zusätzlich erwärmt werden. Am Austritt der Düse 50 wird die Extrusionsmasse 44 zu einem Profilstrang 20a geformt.

**Fig. 6** zeigt die Beschichtung eines gedämmten Bauteils 12a. Dabei wird zwischen dem gedämmten Bauteil 12a und einer Pulversprühdüse **54** ein elektrisches Potenzial angelegt, sodass Pulverpartikel **56** elektrisch geladen werden und sich auf dem gedämmten Bauteil 12a in einer dünnen Schicht abscheiden.

Zusammengefasst betrifft die Erfindung ein gedämmtes Bauteil 12a, das mindestens ein erstes Rahmenprofilteil 14a und/oder ein erstes Isolationsprofil 16a aufweist, wobei an dem Rahmenprofilteil 14a oder dem Isolationsprofil 16a ein Profilstrang 20a zur Wärmedämmung angeordnet ist. Der Profilstrang 20a besteht aus Dämmmaterial, das aus Polyethylenterephthalat in Kombination mit einem Kettenverlängerer geschäumt ist. Das Dämmmaterial kann Wachs und/oder Flammschutzmittel enthalten. Das gedämmte Bauteil kann ein erstes Rahmenprofilteil 14a und ein zweites Rahmenprofilteil 14b aufweisen, wobei zwischen erstem Rahmenprofilteil 14a und zweitem Rahmenprofilteil 14b ein Profilstrang 20a zur Wärmedämmung angeordnet sein kann. Weiterhin können zwischen erstem Rahmenprofilteil 14a und zweitem Rahmenprofilteil 14b eine oder mehrere Fensterscheiben 24 angeordnet sein. Zwischen Profilstrang 20a und Fensterscheibe 24 kann ein Kunststoffprofil 22 angeordnet sein. Zwischen erstem Rahmenprofilteil 14a und zweitem Rahmenprofilteil 14b kann ein Isolationsprofil 16a angeordnet sein, wobei erstes Rahmenprofilteil 14a, zweites Rahmenprofilteil 14b und Isolationsprofil 16a einen Hohlraum bilden, wobei ein Profilstrang 20a in dem Hohlraum angeordnet sein kann und diesen zum großen Teil ausfüllt. Zwischen Isolationsprofil 16a und Fensterscheibe 24 kann ein Kunststoffprofil 22 angeordnet sein.

Die Erfindung betrifft weiterhin ein Verfahren zum Herstellen eines gedämmten Bauteils 12a, indem einer Extrusionsmasse 44 aus Polyethylenterephthalat ein Kettenverlängerer zugesetzt wird und die Extrusionsmasse 44 in einem Extruderverfahren geschäumt wird. Der extrudierte geschäumte Profilstrang 20a kann auf einem Trägerteil, das ein Rahmenprofilteil 14a oder ein Isolationsprofil 16a sein kann, befestigt werden, indem er mit dem Trägerteil verschraubt, verklebt oder verschweißt wird. Das gedämmte Bauteil 12a kann pulverbeschichtet werden.

## Patentansprüche

1. Gedämmtes Bauteil (12a) mit einem Profilstrang (20a) zur Wärmedämmung, wobei der Profilstrang (20a) ein Dämmmaterial aus aufgeschäumtem Polyethylenterephthalat aufweist,
wobei mehrere Polyethylenterephthalat-Moleküle miteinander mittelbar oder unmittelbar über einen Kettenverlängerer verbunden sind,
**dadurch gekennzeichnet, dass** der Profilstrang (20a) zusammen mit weiteren Teilen des gedämmten Bauteils (12a) pulverbeschichtet ist.

2. Gedämmtes Bauteil nach Anspruch 1, bei dem der Kettenverlängerer in Form von Pyromellitsäuredianhydrid, Trimellitsäureanhydrid und/oder 1,4-Bis(4,5-dihydro-2-oxazolyl)benzen ausgebildet ist.

3. Gedämmtes Bauteil nach einem der vorhergehenden Ansprüche, wobei das Dämmmaterial ein Gleitmittel, insbesondere ein Wachs, enthält.

4. Gedämmtes Bauteil nach einem der vorhergehenden Ansprüche, wobei das Dämmmaterial einen Flammschutz, insbesondere in Form einer Phosphorverbindung, enthält.

5. Gedämmtes Bauteil nach einem der vorhergehenden Ansprüche, wobei das gedämmte Bauteil (12a) ein Trägerteil aufweist, wobei der Profilstrang (20a) zur Wärmedämmung auf dem Trägerteil befestigt, insbesondere geklebt, geschweißt oder geschraubt, ist.

6. Gedämmtes Bauteil nach einem der vorhergehenden Ansprüche, wobei das gedämmte Bauteil (12a) ein hohles Profil aufweist, das aus zusammengefügten Profilteilen besteht, wobei ein erstes Rahmenprofilteil (14a) und ein zweites Rahmenprofilteil (14b) über ein Isolationsprofil (16a) miteinander verbunden sind, wobei die Rahmenprofilteile (14a, 14b) und das Isolationsprofil (16a) einen Hohlraum bilden, an dessen Innenwandung der Profilstrang (20a) zur Wärmedämmung angeordnet ist.

7. Gedämmtes Bauteil nach Anspruch 6 in Verbindung mit Anspruch 5, wobei das Isolationsprofil (16a) einen ersten Trennsteg (18a) und einem zweiten Trennsteg (18b), insbesondere aus Polyamid und/oder Acrylnitril-Butadien-Styrol (ABS), aufweist, wobei jeder Trennsteg (18a, 18b) an einer ersten Seite mit dem ersten Rahmenprofilteil (14a) und an einer zweiten Seite mit dem zweiten Rahmenprofilteil (14b) verbunden ist, und wobei der erste Trennsteg (18a) das Trägerteil bildet, an dem der Profilstrang (20a) zur Wärmedämmung angeordnet ist.

8. Gedämmtes Bauteil nach Anspruch 6 oder 7, wobei der Profilstrang (20a) zur Wärmedämmung eine flexible Form aufweist und gegen zwei gegenüberliegende Innenwandungen des Hohlraums verspannt ist, sodass eine kraftschlüssige Verbindung zwischen Profilstrang (20a) und dem umschließenden Profil besteht.

9. Gedämmtes Bauteil nach einem der vorhergehenden Ansprüche, wobei das gedämmte Bauteil (12a) ein an dem Profilstrang (20a) angeordnetes Kunststoffprofil (22) zum Abstützen einer Fensterscheibe (24) aufweist, wobei das Kunststoffprofil (22) aus einem weicheren Material als der Profilstrang (20a), insbesondere aus Polyethylen, besteht.

10. Gedämmtes Bauteil nach Anspruch 9, wobei das Kunststoffprofil (22) aus mindestens einer Schnur (40) besteht, die auf den Profilstrang (20a) aufgeklebt oder aufgeschäumt ist.

11. Gedämmtes Bauteil nach einem der Ansprüche 6 bis 10, wobei eine Fensterscheibe (24) des gedämmten Bauteils (12a) abschnittsweise in dem Isolationsprofil (16a) eingefasst ist.

12. Verfahren zur Herstellung eines gedämmten Bauteils, insbesondere eines gedämmten Bauteils nach einem der Ansprüche 1 bis 11, wobei das Verfahren folgenden Verfahrensschritt aufweist:
A) Extrudieren einer Extrusionsmasse (44), wobei die Extrusionsmasse (44) Polyethylenterephthalat, einen Kettenverlängerer und Treibmittel aufweist, wobei die Extrusionsmasse (44) in einem Extruder (42) zu dem Profilstrang (20a) extrudiert und aufgeschäumt wird;
und wobei das Verfahren folgenden weiteren Verfahrensschritt aufweist: Pulverbeschichten des gedämmten Bauteils (12a) mitsamt Profilstrang (20a).

13. Verfahren zur Herstellung eines gedämmten Bauteils nach Anspruch 12, wobei das Verfahren folgenden weiteren Verfahrensschritt aufweist:
Anordnen des extrudierten Profilstrangs (20a) auf einem Trägerteil, mit dem es verschweißt oder mit einem temperaturbeständigen Klebstoff (52) verklebt wird.

## Claims

1. Insulated component (12a) having a profile strand (20a) for thermal insulation, wherein the profile strand (20a) has an insulating material of foamed polyethylene terephthalate, wherein a plurality of polyethylene terephthalate molecules are connected to each other indirectly or directly via a chain extender,
**characterised in that** the profile strand (20a) is powder-coated together with other components of the insulated component (12a).

2. Insulated component according to claim 1, wherein the chain extender is constructed in the form of pyromellitic dianhydride, trimellitic anhydride and/or 1,4-bis(4,5-dihydro-2-oxazolyl)benzene.

3. Insulated component according to either of the preceding claims, wherein the insulating material contains a sliding agent, in particular a wax.

4. Insulated component according to any one of the preceding claims, wherein the insulating material contains a flame protection, in particular in the form of a phosphorus compound.

5. Insulated component according to any one of the preceding claims, wherein the insulated component (12a) has a carrier member, wherein the profile strand (20a) for thermal insulation is secured to the carrier member, in particular adhesively bonded, welded or screwed.

6. Insulated component according to any one of the preceding claims, wherein the insulated component (12a) has a hollow profile, which comprises assembled profile-members, wherein a first frame profile-member (14a) and a second frame profile-member (14b) are connected to each other by means of an insulating profile (16a), wherein the frame profile-members (14a, 14b) and the insulating profile (16a) form a hollow space, on the inner wall of which the profile strand (20a) is arranged for thermal insulation.

7. Insulated component according to claim 6 together with claim 5, wherein the insulating profile (16a) has a first separation web (18a) and a second separation web (18b), in particular of polyamide and/or acrylonitrile butadiene styrene (ABS), wherein each separation web (18a, 18b) is connected at a first side to the first frame profile-member (14a) and at a second side to the second frame profile-member (14b), and wherein the first separation web (18a) forms the carrier component, on which the profile strand (20a) for thermal insulation is arranged.

8. Insulated component according to claim 6 or 7, wherein the profile strand (20a) for thermal insulation has a flexible shape and is tensioned with respect to two opposing inner walls of the hollow space so that a non-positive-locking connection exists between the profile strand (20a) and the surrounding profile.

9. Insulated component according to any one of the preceding claims, wherein the insulated component (12a) has a plastics material profile (22) which is arranged on the profile strand (20a) for supporting a window pane (24), wherein the plastics material profile (22) comprises a softer material than the profile strand (20a), in particular of polyethylene.

10. Insulated component according to claim 9, wherein the plastics material profile (22) comprises at least one cord (40) which is adhesively bonded or foamed onto the profile strand (20a).

11. Insulated component according to any one of claims 6 to 10, wherein a window pane (24) of the insulated component (12a) is partially enclosed in the insulating profile (16a).

12. Method for producing an insulated component, in particular an insulated component according to any one of claims 1 to 11, wherein the method has the following method step:
A) extruding an extrusion mass (44), wherein the extrusion mass (44) has polyethylene terephthalate, a chain extender and propellant, wherein the extrusion mass (44) is extruded in an extruder (42) to form the profile strand (20a) and foamed on;
and wherein the method has the following additional method step:
powder-coating the insulated component (12a) together with the profile strand (20a).

13. Method for producing an insulated component according to claim 12, wherein the method has the following additional method step:
arranging the extruded profile strand (20a) on a carrier member to which it is welded or adhesively bonded with a temperature-resistant adhesive (52).

## Revendications

1. Composant isolé (12a) muni d'un boudin profilé (20a) pour l'isolation thermique, le boudin profilé (20a) comprenant un matériau isolant en polyéthylène téréphtalate moussé,
dans lequel plusieurs molécules de polyéthylène téréphtalate sont reliées les unes avec les autres indirectement ou directement par l'intermédiaire d'un allongeur de chaîne,
**caractérisé en ce que** le boudin profilé (20a) est revêtu par de la poudre conjointement avec d'autres parties du composant isolé (12a).

2. Composant isolé selon la revendication 1, dans lequel l'allongeur de chaîne est configuré sous la forme de dianhydride d'acide pyromellitique, d'anhydride d'acide trimellitique et/ou de 1,4-bis(4,5-dihydro-2-oxazolyl)benzène.

3. Composant isolé selon l'une quelconque des revendications précédentes, dans lequel le matériau isolant contient un agent lubrifiant, notamment une cire.

4. Composant isolé selon l'une quelconque des revendications précédentes, dans lequel le matériau isolant contient une protection ignifuge, notamment sous la forme d'un composé de phosphore.

5. Composant isolé selon l'une quelconque des revendications précédentes, le composant isolé (12a) comprenant une partie de support, le boudin profilé (20a) pour l'isolation thermique étant fixé sur la partie de support, notamment collé, soudé ou vissé.

6. Composant isolé selon l'une quelconque des revendications précédentes, le composant isolé (12a) comprenant un profilé creux, qui est constitué par des parties de profilé assemblées, une première partie de profilé de cadre (14a) et une deuxième partie de profilé de cadre (14b) étant reliées l'une avec l'autre par l'intermédiaire d'un profilé d'isolation (16a), les parties de profilé de cadre (14a, 14b) et le profilé d'isolation (16a) formant une cavité, sur la paroi intérieure de laquelle le boudin profilé (20a) pour l'isolation thermique est agencé.

7. Composant isolé selon la revendication 6 en connexion avec la revendication 5, dans lequel le profilé d'isolation (16a) comprend une première traverse de séparation (18a) et une deuxième traverse de séparation (18b), notamment en polyamide et/ou acrylonitrile-butadiène-styrène (ABS), chaque traverse de séparation (18a, 18b) étant reliée sur un premier côté avec la première partie de profilé de cadre (14a) et sur un deuxième côté avec la deuxième partie de profilé de cadre (14b), et la première traverse de séparation (18a) formant la partie de support, sur laquelle le boudin profilé (20a) pour l'isolation thermique est agencé.

8. Composant isolé selon la revendication 6 ou 7, dans lequel le boudin profilé (20a) pour l'isolation thermique présente une forme flexible et est serré contre deux parois intérieures opposées de la cavité, de telle sorte qu'une liaison par accouplement de force existe entre le boudin profilé (20a) et le profilé entourant.

9. Composant isolé selon l'une quelconque des revendications précédentes, le composant isolé (12a) comprenant un profilé en matière plastique (22) agencé sur le boudin profilé (20a) pour le soutien d'une vitre de fenêtre (24), le profilé en matière plastique (22) étant constitué par un matériau plus mou que le boudin profilé (20a), notamment par du polyéthylène.

10. Composant isolé selon la revendication 9, dans lequel le profilé en matière plastique (22) est constitué par au moins un cordon (40), qui est collé ou moussé sur le boudin profilé (20a).

11. Composant isolé selon l'une quelconque des revendications 6 à 10, dans lequel une vitre de fenêtre (24) du composant isolé (12a) est bordée en sections dans le profilé d'isolation (16a).

12. Procédé de fabrication d'un composant isolé, notamment d'un composant isolé selon l'une quelconque des revendications 1 à 11, le procédé comprenant l'étape de procédé suivante :
A) l'extrusion d'une masse d'extrusion (44), la masse d'extrusion (44) comprenant du polyéthylène téréphtalate, un allongeur de chaîne et un agent gonflant, la masse d'extrusion (44) étant extrudée dans une extrudeuse (42) en le boudin profilé (20a) et moussée ;
et le procédé comprenant l'étape de procédé supplémentaire suivante :
le revêtement par de la poudre du composant isolé (12a) conjointement avec le boudin profilé (20a).

13. Procédé de fabrication d'un composant isolé selon la revendication 12, le procédé comprenant l'étape de procédé supplémentaire suivante :
l'agencement du boudin profilé extrudé (20a) sur une partie de support, avec laquelle il est soudé ou collé avec un adhésif résistant à la température (52).
